(19) Europäisches Patentamt
European Patent Office
Office européen des brevets

(11) EP 2 604 652 B1

(12) **EUROPEAN PATENT SPECIFICATION**

(45) Date of publication and mention of the grant of the patent:
**04.01.2017 Bulletin 2017/01**

(21) Application number: **11816284.1**

(22) Date of filing: **08.07.2011**

(51) Int Cl.:
***C08K 5/12*** (2006.01) ***C08L 27/06*** (2006.01)
***B29C 41/18*** (2006.01) ***B32B 27/30*** (2006.01)
***B60K 37/00*** (2006.01) *B32B 27/40* (2006.01)

(86) International application number:
**PCT/JP2011/065697**

(87) International publication number:
**WO 2012/020618 (16.02.2012 Gazette 2012/07)**

(54) **VINYL CHLORIDE RESIN COMPOSITION FOR FORMING POWDER, AND FORMED ARTICLE AND LAMINATE OF VINYL CHLORIDE RESIN**

VINYLCHLORIDHARZZUSAMMENSETZUNG ZUR PULVERFORMUNG SOWIE FORMARTIKEL UND LAMINAT AUS VINYLCHLORIDHARZ

COMPOSITION DE RÉSINE DE CHLORURE DE VINYLE POUR FORMER UNE POUDRE, ET ARTICLE FAÇONNÉ ET STRATIFIÉ DE RÉSINE DE CHLORURE DE VINYLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2010 JP 2010180669**

(43) Date of publication of application:
**19.06.2013 Bulletin 2013/25**

(73) Proprietor: **Zeon Corporation**
**Tokyo 100-8246 (JP)**

(72) Inventors:
- **KOBAYASHI, Toshiya**
  **Tokyo 100-8246 (JP)**
- **IWAHORI, Takahisa**
  **Tokyo 100-8246 (JP)**

(74) Representative: **Vossius & Partner**
**Patentanwälte Rechtsanwälte mbB**
**Siebertstrasse 3**
**81675 München (DE)**

(56) References cited:
**EP-A1- 0 354 700** **WO-A2-02/094610**
**JP-A- 2 138 355** **JP-A- 2004 533 362**

- **DATABASE CA [Online] CHEMICAL ABSTRACTS SERVICE, COLUMBUS, OHIO, US; AONO, WATARU ET AL: "Vinyl chloride resin compositions for integral moldings with glass and the molded products", XP002718833, retrieved from STN Database accession no. 1993:540543 -& JP 5 117470 A (SEKISUI CHEMICAL CO. LTD., JAPAN) 14 May 1993 (1993-05-14)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical Field

The present invention relates to (i) a vinyl chloride resin composition for powder molding, which is capable of providing a molded article thereof which (a) has an excellent thermal aging resistance even in a case where a polyurethane foam molded article is stacked on the molded article, and (b) generates fewer volatiles therefrom even in a case where the molded article is heated, (ii) a vinyl chloride resin molded article obtained by subjecting the vinyl chloride resin composition for powder molding to powder slush molding, and (iii) a laminate in which the vinyl chloride resin molded article and a polyurethane foam molded article are stacked.

Background Art

An automobile instrument panel has a structure in which a polyurethane foam layer is provided between a surface and a substrate which are made from vinyl chloride resin. The surface made from the vinyl chloride resin changes its color and deteriorates its thermal aging resistance over time. A factor causing the change in the color of the surface is a chemical reaction made by a transition of tertiary amine to the surface made from the vinyl chloride resin, which tertiary amine has been used as a catalyst during forming of the polyurethane foam layer. In order to prevent the change in the color of the surface, consideration was made as to an urethane-integrated foaming molded article in which a particulate catching agent for capturing a volatile organic compound generated in the polyurethane foam layer is covered with a sheet of continuous air bubbles and provided in the vicinity of a part of an end of the polyurethane foam layer at which part the end of the polyurethane foam layer is sealed by the surface material and the substrate (see, for example, Patent Literature 1). However, the urethane-integrated foaming molded article has a part where the surface is in contact with the polyurethane foam layer. This makes it impossible to prevent, for a long period of time, the change in the color of the surface material caused by the chemical reaction, thereby deteriorating the thermal aging resistance of the surface material.

Further, consideration was made as to a laminate in which (i) a foaming layer made from synthetic resin is provided to bond a core material and a surface and (ii) holes, from which gas generated in the foaming layer is to be discharged, are formed in the core material (see, for example, Patent Literature 2). However, the laminate has a part where the surface is in contact with the foaming layer. This makes it impossible to prevent, for a long period of time, change in color of the surface material caused by the chemical reaction, thereby deteriorating thermal aging resistance of the surface material.

Furthermore, consideration was made as to a molded article made up of (i) a polyurethane molded article, (ii) a surface layer which is made from vinyl chloride resin and covers at least a part of a surface of the polyurethane molded article, and (iii) a layer of an amine catching agent sandwiched between the polyurethane molded article and the surface layer (see, for example, Patent Literature 3). However, the amine catching agent easily volatilizes, and it is impossible to prevent, for a long period of time, transition of tertiary amine to the surface layer made from the vinyl chloride resin. This makes it impossible to prevent, for a long period of time, change in color of the surface layer caused by the chemical reaction, thereby deteriorating thermal aging resistance of the surface layer.

Moreover, consideration was made as to use of a vinyl chloride resin composition for powder molding, with which a specific trimellitate plasticizer is mixed, as a raw material for a surface of an automobile interior material (see, for example, Patent Literature 4). In order to improve thermal aging resistance of the surface made from powder of the vinyl chloride resin composition for powder molding, it is necessary to increase a mixture ratio of the trimellitate plasticizer. Such increase in the mixture ratio of the trimellitate plasticizer causes stickiness due to the trimellitate plasticizer.

Citation List

Patent Literatures

Patent Literature 1 JP 2007-216506 A
Patent Literature 2 JPH 8-90697 A
Patent Literature 3 JP 4-26303 B
Patent Literature 4 EP 0 354 700 A1

WO 02/094610 A2 describes a plasticized PVC composition comprising 40 to 60 percent of virgin PVC in combination with plasticizers, such as trimellitate esters and alcohol phthalates.

Summary of Invention

Technical Problem

Recently, an automobile instrument panel surface, in which a polyurethane foam layer is stacked, has been required to have a more excellent thermal aging resistance and prevent volatiles from being generated during heating. However, an automobile instrument panel having a surface that sufficiently meets such requirements has not been realized.

An object of the present invention is to provide a vinyl chloride resin composition

for powder molding, which is
capable of forming a molded article thereof which (i) has an excellent thermal aging resistance even in a case where a polyurethane foam layer is stacked on the molded article and (ii) generates fewer volatiles therefrom even in a case where the molded article is heated. Another object of the present invention is to provide (i) a vinyl chloride resin molded article which is obtained by subjecting the vinyl chloride resin composition for powder molding to powder slush molding, has an excellent thermal aging resistance even in a case where a polyurethane foam layer is stacked on the vinyl chloride resin molded article, and generates fewer volatiles therefrom even in a case where the vinyl chloride resin molded article is heated, and (ii) a laminate in which the vinyl chloride resin molded article and a polyurethane foam molded article are stacked.

Solution to Problem

In order to attain the objects, the inventors of the present invention diligently studied, and found that a vinyl chloride resin composition for powder molding according to claim 1, obtained by mixing (a) a vinyl chloride resin, (b) a specific trimellitate plasticizer, and (c) a specific diester phthalate plasticizer attains the objects. Thus, the inventors have completed the present invention.

The present invention is a vinyl chloride resin composition for powder molding, containing: 100 parts by mass of (a) a vinyl chloride resin; 65 to 105 parts by mass of (b) a trimellitate plasticizer represented by formula (1); and 10 to 50 parts by mass of (c) a diester phthalate plasticizer represented by formula (2), a mixture ratio of (c) the diester phthalate plasticizer represented by formula (2), to whole plasticizers being in a range of 5 to 50 percents by mass.

[Chem. 1]

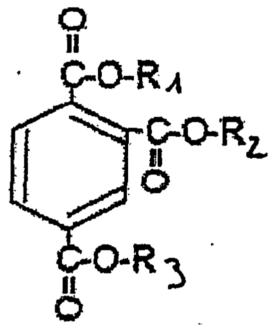

(1)

where $R_1$ through $R_3$ represent an alkyl group and may be identical with each other or different from each other, a linear chain ratio of $R_1$ through $R_3$ is 90 mol% or more, a ratio of an alkyl group having 7 carbons or less to the whole whole alkyl groups of $R_1$ through $R_3$ ranges from 0 to 10 mol%, a ratio of an alkyl group having 8 or 9 carbons to the whole alkyl groups of $R_1$ through $R_3$ ranges from 0 to 85 mol%, a ratio of an alkyl group having 10 carbons to the whole alkyl groups of $R_1$ through $R_3$ ranges from 15 to 100 mol%, and a ratio of an alkyl group having 11 or more carbons to the whole alkyl groups of $R_1$ through $R_3$ ranges from 0 to 10 mol%, and the linear chain ratio of $R_1$ through $R_3$ is a ratio of a linear chain alkyl group to the whole alkyl groups of $R_1$ through $R_3$.

[Chem. 2]

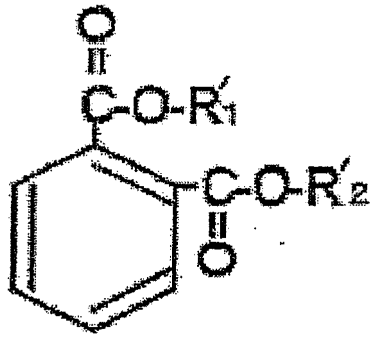

(2)

where $R'_1$ and $R'_2$ represent an alkyl group and may be identical with each other or different from each other, a linear chain ratio of $R'_1$ and $R'_2$ is 60 mol% or more, a ratio of an alkyl group having 8 carbons or less to whole alkyl groups of $R'_1$ and $R'_2$ ranges from 0 to 10 mol%, a ratio of an alkyl group having 9 carbons to the whole alkyl groups of $R'_1$ and $R'_2$ ranges from 10 to 30 mol%, a ratio of an alkyl group having 10 carbons to the whole alkyl groups of $R'_1$ and $R'_2$ ranges from 30 to 50 mol%, a ratio of an alkyl group having 11 carbons to the whole alkyl groups of $R'_1$ and $R'_2$ ranges from 30 to 50 mol%, and a ratio of an alkyl group having 12 carbons or more to the whole alkyl groups of $R'_1$ and $R'_2$ ranges from 0 to 10 mol%, and the linear chain ratio of $R'_1$ and $R'_2$ is a ratio of a linear chain alkyl group to the whole alkyl groups of $R'_1$ and $R'_2$.

Advantageous Effects of Invention

A vinyl chloride resin composition of the present invention for powder molding provides a molded article thereof which (i) has an excellent thermal aging resistance even in a case where a polyurethane foam layer is stacked on the molded article and (ii) generates fewer volatiles therefrom even in a case where the molded article is heated.

For a fuller understanding of the nature and advantages of the invention, reference should be made to the ensuing detailed description taken in conjunction with the accompanying drawings.

Description of Embodiments

A vinyl chloride resin composition of the present invention for powder molding contains (a) a vinyl chloride resin. Examples of (a) the vinyl chloride resin contain copolymers containing preferably 50 percents by mass or more of a vinyl chloride unit, and more preferably 70 percents by mass or more of a vinyl chloride unit, in addition to homopolymers of vinyl chloride. Specific examples of comonomers of vinyl chloride copolymers include: olefins such as ethylene and propylene; olefin halides such as allyl chloride, vinylidene chloride, vinyl fluoride, and ethylene chloride trifluoride; carboxylate vinyl esters such as vinyl acetate and vinyl propionate; vinyl ethers such as isobutyl vinyl ether and cetyl vinyl ether; allyl ethers such as allyl-3-chloro-2-oxypropyl ether and allyl glycidyl ether; unsaturated carboxylic acids, esters thereof, and acid anhydrides thereof such as acrylic acid, maleic acid, itaconic acid, acrylic acid-2-hydroxyethyl, methyl methacrylate, monomethyl maleate, diethyl maleate, and maleic anhydride; unsaturated nitriles such as acrylonitrile and methacrylonitrile; acrylic amides such as acrylic amide, N-methylol acrylic amide, acrylic amide-2-methyl propane sulfonic acid, and (meth)acrylamide propyltrimethyl ammonium chloride; allylamines and derivatives thereof such as allylamine benzoate and diallyl dimethyl ammonium chloride; and so on. The above monomers are only parts of monomers capable of copolymerizing with vinyl chloride, and monomers shown on pages 75 to 104 of "Polyvinyl chloride" (edited by THE KINKI CHEMICAL SOCIETY JAPAN, published by Nikkan Kogyo Shinbun Ltd., (1988)) can be used as the monomers capable of copolymerizing with vinyl chloride. One or a combination of two or more of the monomers can be used. (a) The vinyl chloride resin includes resin obtained by graft-polymerizing resin such as an ethylene-vinyl acetate copolymer, an ethylene-methyl methacrylate copolymer, an ethylene-ethyl acrylate copolymer, or chlorinated polyethylene with (1) vinyl chloride or (2) vinyl chloride and the copolymerizable monomer described above.

(a) The vinyl chloride resin can be produced by conventionally known methods such as suspension polymerization, emulsion polymerization, solution polymerization, and bulk polymerization. In particular, vinyl chloride resin produced by the suspension polymerization is preferable.

The average degree of polymerization of (a) the vinyl chloride resin is 1000 or more, and preferably 1500 to 3000. If the average degree of polymerization of (a) the vinyl chloride resin is not less than 1000, the powder flowability

of the vinyl chloride resin composition for powder molding can be further improved. Note that the average degree of polymerization of (a) the vinyl chloride resin is measured on the basis of JIS K 6720-2.

The average particle size of (a) the vinyl chloride resin is not particularly limited. However, the average particle size of (a) the vinyl chloride resin preferably ranges from 50 μm to 500 μm, more preferably ranges from 50 μm to 250 μm, and further preferably ranges from 100 μm to 200 μm. If the average particle size of (a) the vinyl chloride resin is not less than 50 μm, the powder flowability of the vinyl chloride resin composition can be further improved. Furthermore, if the average particle size of (a) the vinyl chloride resin is not more than 500 μm, it is possible to improve smoothness of a molded article obtained by subjecting the vinyl chloride resin composition to powder slush molding. Note that the average particle size of (a) the vinyl chloride resin is measured by classification by use of the JIS standard sieve defined by JIS Z 8801.

The vinyl chloride resin composition of the present invention for powder molding contains (b) a trimellitate plasticizer represented by the following formula (1).

[Chem. 3]

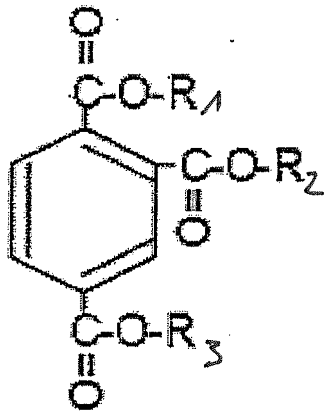

(1)

where $R_1$ through $R_3$ represent an alkyl group and may be identical with each other or different from each other, a linear chain ratio of $R_1$ through $R_3$ is 90 mol% or more, and preferably 95 mol% or more, a ratio of an alkyl group having 7 carbons or less to whole alkyl groups of $R_1$ through $R_3$ ranges from 0 to 10 mol%, a ratio of an alkyl group having 8 or 9 carbons to the whole alkyl groups of $R_1$ through $R_3$ ranges from 0 to 85 mol%, a ratio of an alkyl group having 10 carbons to the whole alkyl groups of $R_1$ through $R_3$ ranges from 15 to 100 mol%, and a ratio of an alkyl group having 11 or more carbons to the whole alkyl groups of $R_1$ through $R_3$ ranges from 0 to 10 mol%. Note that the linear chain ratio of $R_1$ through $R_3$ is a ratio of a linear chain alkyl group to the whole alkyl groups of $R_1$ through $R_3$.

Specific examples of the linear chain alkyl group include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-hexadecyl group, an n-pentadecyl group, an n-hexadecyl group, an n-heptadecyl group, an n-stearyl group, and so on. Specific examples of a branched alkyl group include an i-propyl group, an i-butyl group, an i-pentyl group, an i-hexyl group, an i-heptyl group, an i-octyl group, an i-nonyl group, an i-decyl group, an i-undecyl group, an i-dodecyl group, an i-tridecyl group, an i-hexadecyl group, an i-pentadecyl group, an i-hexadecyl group, an i-heptadecyl group, an i-octadecyl group, a t-butyl group, a t-pentyl group, a t-hexyl group, a t-heptyl group, a t-octyl group, a t-nonyl group, a t-decyl group, a t-undecyl group, a t-dodecyl group, a t-tridecyl group, a t-hexadecyl group, a t-pentadecyl group, a t-hexadecyl group, a t-heptadecyl group, a t-octadecyl group, a 2-ethylhexyl group, and so on.

The trimellitate plasticizer may be a single compound or may be a mixture of plural components. In general, commercially available trimellitate plasticizers are mixtures. Among such commercially-available mixtures, a mixture which meets the above requirements is preferably selected. A specific example of the commercially-available trimellitate plasticizers is TRIMEX N-08 produced by Kao Corporation.

A mixture ratio of the trimellitate plasticizer represented by the formula (1) to 100 parts by mass of (a) the vinyl chloride resin is in a range of 65 to 105 parts by mass.

The vinyl chloride resin composition of the present invention for powder molding contains (c) a diester phthalate plasticizer represented by the following formula (2).

[Chem. 4]

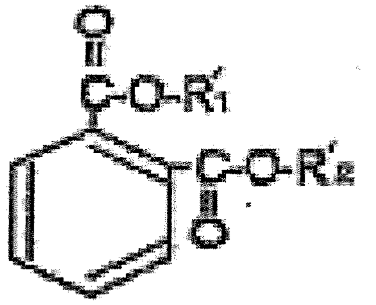

(2)

where R'$_1$ and R'$_2$ represent a linear chain or branched alkyl group and may be identical with each other or different from each other, a linear chain ratio of R'$_1$ and R'$_2$ is 60 mol% or more, preferably 70 mol% or more, and further preferably 80 mol% or more, a ratio of an alkyl group having 8 carbons or less to whole alkyl groups of R'$_1$ and R'$_2$ ranges from 0 to 10 mol%, a ratio of an alkyl group having 9 carbons to the whole alkyl groups of R'$_1$ and R'$_2$ ranges from 10 to 30 mol%, a ratio of an alkyl group having 10 carbons to the whole alkyl groups of R'$_1$ and R'$_2$ ranges from 30 to 50 mol%, a ratio of an alkyl group having 11 carbons to the whole alkyl groups of R'$_1$ and R'$_2$ ranges from 30 to 50 mol%, and a ratio of an alkyl group having 12 carbons or more to the whole alkyl groups of R'$_1$ and R'$_2$ ranges from 0 to 10 mol%, and the linear chain ratio of R'$_1$ and R'$_2$ is a ratio of a linear chain alkyl group to the whole alkyl groups of R'$_1$ and R'$_2$ .

The diester phthalate plasticizer is commercially available. A specific example of commercially-available diester phthalate plasticizers is PL-200 produced by CG Ester Corporation.

A mixture ratio of the diester phthalate plasticizer to 100 parts by mass of (a) the vinyl chloride resin is 10 to 50 parts by mass. A too low mixture ratio of the diester phthalate plasticizer deteriorates thermal aging resistance of a vinyl chloride resin molded article on which a polyurethane foam molded article is stacked and which is obtained by subjecting a vinyl chloride resin composition for powder molding to powder slush molding. On the other hand, a too high mixture ratio of the diester phthalate plasticizer causes a vinyl chloride resin molded article obtained by subjecting a vinyl chloride resin composition for powder molding to powder slush molding to generate more volatiles therefrom while being heated.

The vinyl chloride resin composition of the present invention for powder molding may contain a plasticizer(s) other than the trimellitate plasticizer and the diester phthalate plasticizer. Specific examples of the plasticizer(s) include: epoxidized vegetable oils such as epoxidized soybean oil and epoxidized flax seed oil; phthalic acid derivatives such as dimethyl phthalate, diethyl phthalate, dibutyl phthalate, di-(2-ethylhexyl) phthalate, di-n-octyl phthalate, diisobutyl phthalate, diheptyl phthalate, diphenyl phthalate, diisodecyl phthalate, ditridecyl phthalate, diundecyl phthalate, dibenzyl phthalate, butyl benzyl phthalate, dinonyl phthalate, and dicyclohexyl phthalate; isophthalic acid derivatives such as dimethyl isophthalate, di-(2-ethylhexyl) isophthalate, and diisooctyl isophathalate; tetrahydro phthalic acid derivatives such as di-(2-ethylhexyl) tetrahydro phthalate, di-n-octyl tetrahydro phthalate, and diisodecyl tetrahydro phthalate; adipic acid derivatives such as di-n-butyl adipate, di(2-ethylhexyl) adipate, diisodecyl adipate, and diisononyl adipate; azelaic acid derivatives such as di-(2-ethylhexyl) azelate, diisooctyl azelate, and din-hexyl azelate; sebacic acid derivatives such as di-n-butyl sebacate, di-(2-ethylhexyl) sebacate, diisodecyl sebacate, and di-(2-butyloctyl) sebacate; maleic acid derivatives such as di-n-butyl maleate, dimethyl maleate, diethyl maleate, and di-(2-ethylhexyl) maleate; fumaric acid derivatives such as di-n-butyl fumarate, and di-(2-ethylhexyl) fumarate; trimellitic acid derivatives such as tri-(2-ethylhexyl) trimellitate, tri-n-octyl trimellitate, triisodecyl trimellitate, triisooctyl trimellitate, tri-n-hexyl trimellitate, and triisononyl trimellitate; pyromellitic acid derivatives such as tetra-(2-ethylhexyl) pyromellitate, and tetra-n-octyl pyrollitate; citric acid derivatives such as triethyl citrate, tri-n-butyl citrate, acetyl triethyl citrate, and acetyl tri-(2-ethylhexyl) citrate; itaconic acid derivatives such as monometyl itaconate, monobutyl itaconate, dimethyl itaconate, diethyl itaconate, dibutyl itaconate, and di-(2-ethylhexyl) itaconate; oleic acid derivatives such as butyl oleate, glyceryl monooleate, and diethylene glycol monooleate; ricinoleic acid derivatives such as methyl acetyl ricinoleate, butyl acetyl ricinoleate, glyceryl monoricinoleate, and diethylene glycol monoricinoleate; stearic acid derivatives such as n-butyl stearate and diethylene glycol distearate; fatty acid derivatives such as diethylene glycol monolaurate, diethylene glycol dipelargonate, and pentaerythritol fatty acid ester; phospholic acid derivatives such as triethyl phosphate, tributyl phosphate, tri-(2-ethylhexyl) phosphate, tributoxyethyl phosphate, triphenyl phosphate, cresyl diphenyl phosphate, tricresyl phosphate, trixylenyl phosphate, and tris(chloroethyl) phosphate; glycol derivatives such as diethylene glycol dibenzoate, dipropyrene glycol

dibenzoate, triethylene glycol dibenzoate, triethylene glycol di-(2-ethylbutylate), triethylene glycol di-(2-ethylhexanoate), and dibutyl methylene bisthioglycolate; glycerin derivatives such as glycerol monoacetate, glycerol triacetate, and glycerol tributylate; epoxy derivatives such as epoxy hexahydro diisodecyl phthalate, epoxy triglyceride, epoxidized octyl oleate, and epoxidized decyl oleate; so-called primary plasticizers such as polyester plasticizers including polyester adipate, polyester sebacate, and polyester phthalate; so-called secondary plasticizers such as chlorinated paraffin, fatty acid ester of glycol (such as triethylene glycol dicaprylate), butyl epoxy stearate, phenyl oleate, and dihydro methyl abietate; and so on. One or a combination of two or more of the plasticizers can be used. In a case where the secondary plasticizer is used, it is preferable to use in combination the primary plasticizer in a mass equal to or larger than that of the secondary plasticizer.

A mixture ratio of (c) the diester phthalate plasticizer represented by the above formula (2) to whole plasticizers is 5 to 50 percents by mass. A too low mixture ratio of (c) the diester phthalate plasticizer deteriorates thermal aging resistance of a vinyl chloride resin molded article on which a polyurethane foam molded article is stacked and which is obtained by subjecting a vinyl chloride resin composition for powder molding to powder slush molding. On the other hand, a too high mixture ratio of (c) the diester phthalate plasticizer causes a vinyl chloride resin molded article obtained by subjecting a vinyl chloride resin composition for powder molding to powder slush molding to generate more volatiles therefrom while being heated.

The vinyl chloride resin composition of the present invention for powder molding may contain saturated fatty acid having a hydroxyl group and/or metallic soap. Specific examples of the saturated fatty acid having a hydroxyl group include hydroxy stearic acid, hydroxy myristic acid, hydroxy lauric acid, and so on. Specific examples of the metallic soap include lithium stearate, magnesium stearate, aluminum stearate, calcium stearate, strontium stearate, barium stearate, zinc stearate, calcium laurate, barium laurate, zinc laurate, 2-ethyl barium hexanoate, 2-ethyl zinc hexanoate, barium ricinoleate, zinc ricinoleate, and so on. The metallic soap is preferably metal salt of fatty acid, more preferably polyvalent metal salt of fatty acid, and further preferably zinc salt of fatty acid. One or a combination of two or more of the saturated fatty acids having a hydroxyl group and/or the metallic soaps is/are mixed. A mixture ratio of the saturated fatty acid having a hydroxyl group and/or the metallic soap is not limited to a specific range. However, the mixture ratio to 100 parts by mass of (a) the vinyl chloride resin is preferably in a range of 0.1 to 3 parts by mass.

The vinyl chloride resin composition of the present invention for powder molding may contain hydrotalcite. The hydrotalcite is a non-stoichiometric compound represented by general formula $[Mg_{1-x}Al_x(OH)_2]^{x+}$ $[(CO_3)_{x/2}\cdot mH_2O]^{x-}$. The hydrotalcite is an inorganic substance having a crystalline structure in which a positively charged basic layer represented by $[Mg_{1-x}Al_x(OH)_2]^{x+}$ and a negatively charged intermediate layer represented by $[(CO_3)_{x/2}\cdot mH_2O]^{x-}$ are stacked. Note here that x is more than 0 but not more than 0.33. Natural hydrotalcite is represented by $Mg_6Al_2(OH)_{16}CO_3\cdot 4H_2O$. Synthesized hydrotalcite is represented by $Mg_{4\cdot 5}Al_2(OH)_{13}CO_3\cdot 3.5H_2O$, which is commercially available. How to produce the synthesized hydrotalcite is described in Japanese Examined Patent Application Publication, Tokukousho, No. 61-174270 B. The hydrotalcite may be subjected to a perchloric acid treatment.

A mixture ratio of the hydrotalcite is not limited to a specific range. It is, however, preferable that the mixture ratio of the hydrotalcite to 100 parts by mass of (a) the vinyl chloride resin is in a range of 0.5 to 10 parts by mass.

The vinyl chloride resin composition of the present invention for powder molding may contain zeolite as a stabilizer. The zeolite is represented by general formula,

$$M_{x/n}\cdot(AlO_2)_x\cdot(SiO_2)_y]\cdot zH_2O$$

where M represents a metal ion having a valence of n, x + y represents the number of tetrahedrons per unit lattice, and z represents the number of mol of water. Specific examples of M include (i) monovalent or divalent metal of sodium, lithium, calcium, magnesium, zinc or the like and (ii) a combination of the metals.

A mixture ratio of the zeolite is not limited to a specific range. It is, however, preferable that the mixture ratio of the zeolite to 100 parts by mass of (a) the vinyl chloride resin is in a range of 0.1 to 5 parts by mass.

The vinyl chloride resin composition of the present invention for powder molding may contain a dusting agent (powder flowability reforming agent). Specific examples of the dusting agent include: inorganic fine particles such as calcium carbonate, talc, and aluminum oxide; and organic fine particles such as vinyl chloride resin fine particles, polyacrylonitrile resin fine particles, poly(meth)acrylate resin fine particles, polystyrene resin fine particles, polyethylene resin fine particles, polypropylene resin fine particles, polyester resin fine particles, and polyamide resin fine particles. In particular, inorganic fine particles whose average particle size ranges from 10 nm to 100 nm, and vinyl chloride resin fine particles whose average particle size ranges from 0.1 μm to 10 μm are preferable. A degree of polymerization of vinyl chloride resin which constitutes vinyl chloride resin fine particles serving as a dusting agent ranges from 500 to 2000, and preferably ranges from 800 to 1500. A mixture ratio of the vinyl chloride resin fine particles serving as a dusting agent is not limited to a specific range. However, the mixture ratio of the vinyl chloride resin fine particles to 100 parts by mass of (a) the vinyl chloride resin is preferably not more than 30 parts by mass, and further preferably not more than 25 parts by mass.

The vinyl chloride resin composition of the present invention for powder molding may contain additives such as a coloring agent, an impact resistance reforming agent, perchloric acid compound (e.g. sodium perchlorate, potassium perchlorate), an oxidization inhibitor, an antifungal agent, a flame retardant, an antistatic agent, a filler, an ultraviolet absorber, a light stabilizer, a foaming agent, and β-diketones.

Specific examples of the coloring agent include quinacridone pigment, perylene pigment, polyazo condensation pigment, isoindolinon pigment, copper phthalocyanine pigment, titanium white, and carbon black. One or a combination of two or more of the pigments is/are used. The quinacridone pigment is obtained by treating p-phenylene dianthranilates with concentrated sulfuric acid, and shows yellowish red to reddish purple. Specific examples of the quinacridone pigment include quinacridon red, quinacridon magenta, and quinacridon violet. The perylene pigment is obtained by condensation reaction of perylene-3, 4, 9, 10-tetracarbolic acid anhydride with aromatic primary amine, and shows red to reddish purple and brown. Specific examples of the perylene pigment include perylene red, perylene orange, perylene maroon, perylene vermilion, and perylene bordeaux. The polyazo condensation pigment is obtained by condensing azo pigment in a solvent to have high molecular weight, and shows yellow or red. Specific examples of the polyazo condensation pigment include polyazo red, polyazo yellow, chromophthal orange, chromophthal red, and chromophthal scarlet. The isoindolinon pigment is obtained by condensation reaction of 4, 5, 6, 7-tetrachloroisoindolinon with aromatic primary diamine, and shows greenish yellow to red and brown. A specific example of the isoindolinon pigment is isoindolinon yellow. The copper phthalocyanine pigment is a pigment in which copper is coordinated to phthalocyanines, and shows yellowish green to vivid blue. Specific examples of the copper phthalocyanine pigment include phthalocyanine green, and phthalocyanine blue. The titanium white is a white pigment made from titanium dioxide, has a great hiding power, and is of anatase-type or rutile-type. The carbon black mainly contains carbon, and is a black pigment containing oxygen, hydrogen, and nitrogen. Specific examples of the carbon black include thermal black, acetylene black, channel black, furnace black, lamp black, and bone black.

Specific examples of the impact resistance reforming agent include acrylonitrile-butadiene-styrene copolymer, methyl methacrylate-butadiene-styrene copolymer, chlorinated polyethylene, vinyl chloride-grafted ethylene-vinyl acetate copolymer, ethylene-vinyl acetate copolymer, chlorosulfonated polyethylene, and so on. One or a combination of two or more of the impact resistance reforming agents can be used. The impact resistance reforming agent becomes non-uniformly dispersed elastic fine particles in a vinyl chloride resin composition. A chain and a polar group which are graft-polymerized with the elastic fine particles are dissolved with (a) the vinyl chloride resin, thereby improving impact resistance of the vinyl chloride resin composition.

Specific examples of the oxidization inhibitor include a phenolic oxidization inhibitor, a sulfur oxidization inhibitor, a phosphorous oxidization inhibitor, and so on.

Specific examples of the antifungal agent include an aliphatic ester antifungal agent, a hydrocarbon antifungal agent, an organic nitrogen antifungal agent, an organic nitrogen sulfur antifungal agent, and so on.

Specific examples of the flame retardant include a halogen flame retardant such as chlorinated paraffin, a phosphorous flame retardant such as phosphate ester, inorganic hydroxides such as magnesium hydroxide and aluminum hydroxide, and so on.

Specific examples of the antistatic agent include: anionic antistatic agents such as fatty acid salts, higher alcohol sulfate esters, and sulfonates; cationic antistatic agents such as aliphatic amine salts, and quaternary ammonium salts; nonionic antistatic agents such as polyoxyethylenealkylethers, and polyoxyethylene alkylphenolethers; and so on.

Specific examples of the filler include silica, talc, mica, calcium carbonate, clay, and so on.

Specific examples of the light stabilizer include a benzotriazol, benzophenone or nickel chelate ultraviolet absorber, a hindered amine light stabilizer, and so on.

Specific examples of the foaming agent include: organic foaming agents such as azo compound (e.g. azodicarbonamide, azobisisobutyronitrile), nitroso compound (e.g. N,N'-dinitroso pentamethylene tetramine), sulfonylhydrazide compound (e.g. p-toluenesulfonylhydrazide, p,p-oxybis(benzenesulfonylhydrazide); gaseous foaming agents such as CFC gas, carbon dioxide gas, water, volatile hydrocarbon compound (e.g. pentane), and microcapsules including the gaseous foaming agents; and so on.

The β-diketones are used to further effectively prevent change in initial color of a vinyl chloride resin molded article obtained by powder molding the vinyl chloride resin composition of the present invention for powder molding. Specific examples of the β-diketones include dibenzoylmethane, stearoylbenzoylmethane, palmitoylbenzoylmethane, and so on. One or a combination of two or more of the β-diketones may be used.

A mixture ratio of the β-diketones is not limited to a specific range. It is, however, preferable that the mixture ratio of the β-diketones to 100 parts by mass of (a) the vinyl chloride resin is in a range of 0.1 to 3 parts by mass.

A method for mixing (a) the vinyl chloride resin, (b) the trimellitate plasticizer represented by the formula (1), (c) the diester phthalate plasticizer represented by the formula (2), and the other additives to be added if necessary, is not limited. It is, however, preferable that the method is dry blend. Further, it is preferable to use a Henschel mixer for the dry blend. Furthermore, during the dry blend, temperature is preferably in a range of 50°C to 100°C, and more preferably in a range of 70°C to 80°C.

The vinyl chloride resin molded article of the present invention is obtained by subjecting the vinyl chloride resin composition of the present invention for powder molding to powder slush molding (also referred to as "powder molding" in the present invention). During the powder slush molding, temperature of a mold is preferably in a range of 200°C to 300°C, and more preferably in a range of 220°C to 280°C. The vinyl chloride resin molded article of the present invention is suitably obtainable as below. The vinyl chloride resin composition of the present invention for powder molding is sprinkled on the mold having the temperature, and let stand for 5 to 30 seconds. Thereafter, surplus of the vinyl chloride resin composition is shaken off from the mold, and then the resultant vinyl chloride resin composition in the mold is let stand for 30 seconds to 3 minutes. After that, the mold is cooled down to 10°C to 60°C, and then the vinyl chloride resin molded article of the present invention is removed from the mold. The vinyl chloride resin molded article of the present invention is suitably applicable to a surface of automobile interior materials such as an instrument panel and a door trim.

A laminate of the present invention is obtained by stacking the vinyl chloride resin molded article of the present invention and a polyurethane foam molded article. A method for stacking them is not limited. Examples of the method include (i) a first method for bonding, by means of thermal fusion or thermal bonding or by use of a conventionally well-known adhesive, the vinyl chloride resin molded article and the polyurethane foam molded article which have been separately produced and (ii) a second method for foaming polyurethane on the vinyl chloride resin molded article by a conventionally well-known method while polymerizing on the vinyl chloride resin molded article, for example, isocyanates and polyols that are raw materials for the polyurethane foam molded article. The second method is simpler, and more preferable than the first method because the second method can surely bond the vinyl chloride resin molded article and the polyurethane foam molded article to each other to form various shapes of laminate.

The laminate of the present invention is suitably applicable to automobile interior materials such as an instrument panel and a door trim.

[Examples]

The following details the present invention by referring to Examples. Physical properties were measured as below.

(1) Elongation at break under low temperature at initial stage and after thermal aging

The vinyl chloride resin composition for powder molding was sprinkled on a textured mold heated up to 250°C, left for 10 seconds to fuse, and then surplus of the vinyl chloride resin composition was shaken down. 60 seconds after sprinkling the vinyl chloride resin composition on the mold, the mold was cooled down by cooling water. When the mold was cooled down to 40°C, a molded vinyl chloride resin sheet of 145 mm x 175 mm x 1 mm was released from the mold. The molded vinyl chloride resin sheet was spread in a mold of 210 mm x 300 mm x 10 mm, and a mixture of 40 parts by mass of 4,4'-diphenylmethane-diisocyanate (MDI) and 80 parts by mass of polyether polyol (EXCENOL 820 produced by Asahi Glass Urethane Co., Ltd., 3 functionalities, hydroxyl value: 34 mgKOH/g, containing 1.0 percent by mass of triethylene diamine and 1.6 percents by mass of water) was poured onto the molded vinyl chloride resin sheet, and the mold was sealed. After 10 minutes, a sample, in which a surface of 1mm in thickness made up of the molded vinyl chloride resin sheet was undercoated with a polyurethane foam molded article of 9 mm in thickness, was taken out of the mold. A polyurethane foam layer is removed from the sample, and the resultant molded vinyl chloride resin sheet was punched through by use of a JIS No. 1 dumbbell. Elongation at break of the molded vinyl chloride resin sheet thus punched was measured on the basis of JIS-K-6301 at - 35°C. Further, the sample was put in an oven and heated up to 130°C for 100 hours or 250 hours, and then elongation at break of the sample was measured in the same manner. The vinyl chloride resin composition was evaluated as having an excellent thermal aging resistance if the elongation at break was 100 % or more.

(2) Gloss retaining ratio of glass plate

A specimen of 80 mm in diameter was obtained by punching through a molded vinyl chloride resin sheet of 1 mm in thickness which had not been in contact with a mixture of 4,4'-diphenylmethane-diisocyanate (MDI) and polyether polyol. The specimen was put in a glass bottle, and the glass bottle was covered with a transparent glass plate. The glass bottle thus covered with the transparent glass plate was left in a silicone oil bath of 100°C for 3 hours. Thereafter, the transparent glass plate was removed from the glass bottle, and the transparent glass plate was let stand at 23°C for 1 hour. Reflectivity of the transparent glass plate at 60° was measured by a gloss test machine (GP-60 produced by Tokyo Denshoku co., ltd.). Reflectivity of the transparent glass plate at 60°, which had not been tested, was measured in advance by the gloss test machine. A gloss retaining ratio of the transparent glass plate was calculated by the following expression (3). As the gloss retaining ratio of the transparent glass plate is higher, the molded vinyl chloride resin sheet generates fewer volatiles therefrom while being heated.

Gloss retaining ratio (%) = 100 × (gloss of glass plate after testing)/ (gloss of glass plate before testing) ··· (3)

[Example 1]

Components shown in Table 1 other than plasticizers (TRIMEX N-08 produced by Kao Corporation, and PL-200 produced by CG Ester Corporation) and paste vinyl chloride resin were mixed in a Henschel mixer. When temperature of the mixture was increased to 80°C, the plasticizers were added into the Henschel mixer to attain dry-up (indicating a state where the plasticizers thus added are absorbed by vinyl chloride resin particles, so that the mixture becomes smooth and dry). After the dry-up, when a composition was cooled down to 70°C or less, the paste vinyl chloride resin serving as a dusting agent was added to the composition to prepare a vinyl chloride resin composition for powder molding. Thermal aging resistance (elongation at break under low temperature at initial stage and after thermal aging) and gloss (a gloss retaining ratio of a glass plate) were measured by the above-described methods. The results of the measurements are shown in Table 1.

[Examples 2 and 3, and Comparative Examples 1 to 4]

In Examples 2 and 3, and Comparative Examples 1 to 4, an operation identical to that of Example 1 was carried out except that components were changed as shown in Table 1.

[Table 1]

| | | Ex. 1 | Ex. 2 | Ex. 3 | Comp. Ex. 1 | Comp. Ex. 2 | Comp. Ex. 3 | Comp Ex.4. |
|---|---|---|---|---|---|---|---|---|
| Mixture Composition (part(s) by mass) | Vinyl chloride resin 1) | 100 | 100 | 100 | 100 | 100 | 100 | 100 |
| | Plasticizer A 2) | 100 | 90 | 80 | 115 | 55 | 110 | 100 |
| | Plasticizer B 3) | 15 | 25 | 35 | - | 60 | 5 | - |
| | Plasticizer C 4) | - | - | - | - | - | - | 15 |
| | Epoxidized soybean oil 5) | 5 | 5 | 5 | 5 | 5 | 5 | 5 |
| | Hydrotalcite with partially introduced perchloric acid 6) | 5 | 5 | 5 | 5 | 5 | 5 | 5 |
| | Zeolite 7) | 1 | 1 | 1 | 1 | 1 | 1 | 1 |
| | β-diketone 8) | 0.3 | 0.3 | 0.3 | 0.3 | 0.3 | 0.3 | 0.3 |
| | Oxidization inhibitor 9) | 1 | 1 | 1 | 1 | 1 | 1 | 1 |
| | Light stabilizer 10) | 0.2 | 0.2 | 0.2 | 0.2 | 0.2 | 0.2 | 0.2 |
| | Ultraviolet absorber 11) | 0.3 | 0.3 | 0.3 | 0.3 | 0.3 | 0.3 | 0.3 |
| | Zinc stearate | 0.2 | 0.2 | 0.2 | 0.2 | 0.2 | 0.2 | 0.2 |
| | Hydroxystearic acid | 0.4 | 0.4 | 0.4 | 0.4 | 0.4 | 0.4 | 0.4 |
| | Paste vinyl chloride resin 12) | 15 | 15 | 15 | 15 | 15 | 15 | 15 |
| | Coloring agent 13) | 5 | 5 | 5 | 5 | 5 | 5 | 5 |
| Mixture ratio of diester phthalate to whole plasticizers (percent(s) by mass) | | 13.0 | 21.7 | 30.4 | 0 | 52.1 | 4.3 | 13.0 |

(continued)

| | | Ex. 1 | Ex. 2 | Ex. 3 | Comp. Ex. 1 | Comp. Ex. 2 | Comp. Ex. 3 | Comp Ex.4. |
|---|---|---|---|---|---|---|---|---|
| Elongation at break by extension at -35°C (%) | Initial stage | 169 | 166 | 166 | 170 | 172 | 169 | 150 |
| | Heated at 130°C for 100 hours | 158 | 145 | 150 | 120 | 156 | 120 | 100 |
| | Heated at 130°C for 250 hours | 135 | 120 | 112 | 90 | 125 | 85 | 64 |
| Gloss retaining Ratio of glass plate (%) | | 98 | 98 | 97 | 98 | 75 | 98 | 68 |

1) ZEST2000Z, produced by Shin Daiichi Enbi Co., Ltd. (average degree of polymerization: 2000; average particle size: 125 μm)
2) TRIMEX N-08, produced by Kao Corporation
3) PL-200, produced by CG Ester Corporation
4) di-(2-ethylhexyl) phthalate
5) O-130P, produced by ADEKA CORPORATION
6) ALCAMIZER 5, produced by Kyowa Chemical Industry Co., Ltd.
7) MIZUKALIZER DS, produced by MIZUSAWA INDUSTRIAL CHEMICALS, LTD
8) RHODIASTAB 50, produced by RHODIA
9) IRGANOX1010, produced by Ciba Specialty Chemicals Inc.
10) ADEKA STAB LA-67, produced by ADEKA CORPORATION
11) TINUVIN P, produced by Ciba Specialty Chemicals Inc.
12) Paste vinyl chloride resin (ZEST PQLT, produced by Shin Daiichi Enbi Co., Ltd., degree of polymerization: 800, average particle size: 1 μm)
13) 5.0 parts by mass of DA PX 1720(A) black, produced by Dainichiseika Color & Chemicals Mfg. Co., Ltd.

When the vinyl chloride resin compositions for powder molding of Examples 1 to 3 were subjected to powder slush molding to form vinyl chloride resin molded articles, and a polyurethane foam molded article was stacked on the vinyl chloride resin molded articles, the vinyl chloride resin molded articles exhibited great thermal aging resistance, and generated fewer volatiles therefrom while being heated.

When (i) the vinyl chloride resin composition for powder molding of Comparative Example 1 including no diester phthalate represented by the formula (2) and (ii) the vinyl chloride resin composition for powder molding of Comparative Example 3 including too less diester phthalate represented by the formula (2) were subjected to power slush molding to form vinyl chloride resin molded articles, and a polyurethane foam molded article was stacked on the vinyl chloride resin molded articles, the vinyl chloride resin molded articles exhibited thermal aging resistance lower than those of the vinyl chloride resin molded articles of Examples. When the vinyl chloride resin composition for powder molding of Comparative Example 2 including too much diester phthalate represented by the formula (2) was subjected to powder slush molding to form a vinyl chloride resin molded article, the vinyl chloride resin molded article generated more volatiles therefrom while being heated. When the vinyl chloride resin composition for powder molding of Comparative Example 4 including no diester phthalate represented by the formula (2) but another phthalate plasticizer was subjected to powder slush molding to form a vinyl chloride resin molded article, and a polyurethane foam molded article was stacked on the vinyl chloride resin molded article, the vinyl chloride resin molded article exhibited thermal aging resistance lower than those of the vinyl chloride resin molded articles of Examples, and generated more volatiles therefrom while being heated.

[Additional Note]

In an embodiment of the present invention, the vinyl chloride resin composition for powder molding is preferably subjected to powder slush molding. In other words, the present invention provides a composition to be subjected to powder slush molding, which composition includes the vinyl chloride resin composition of the present invention for powder molding.

The present invention is a vinyl chloride resin molded article obtained by subjecting the vinyl chloride resin composition for powder molding to powder slush molding. The vinyl chloride resin molded article is preferably an automobile instrument panel surface.

Further, the present invention is a laminate in which a polyurethane foam molded article and the vinyl chloride resin molded article are stacked. The laminate is preferably a laminate for use in an automobile instrument panel.

The embodiments and concrete examples of implementation discussed in the foregoing detailed explanation serve solely to illustrate the technical details of the present invention.

Industrial Applicability

A vinyl chloride resin composition of the present invention for powder molding is suitably applicable to a surface of automobile interior materials such as an instrument panel and a door trim.

## Claims

1. A vinyl chloride resin composition for powder molding, comprising:

100 parts by mass of (a) a vinyl chloride resin;
65 to 105 parts by mass of (b) a trimellitate plasticizer represented by formula (1); and
10 to 50 parts by mass of (c) a diester phthalate plasticizer represented by formula (2),
a mixture ratio of (c) the diester phthalate plasticizer represented by formula (2), to whole plasticizers being in a range of 5 to 50 percents by mass,

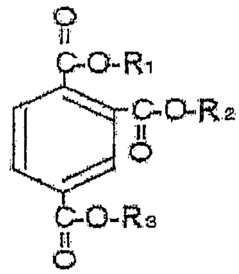
(1)

wherein

$R_1$ through $R_3$ represent an alkyl group and may be identical with each other or different from each other,
a linear chain ratio of $R_1$ through $R_3$ is 90 mol% or more,
a ratio of an alkyl group having 7 carbons or less to the whole alkyl groups of $R_1$ through $R_3$ ranges from 0 to 10 mol%,
a ratio of an alkyl group having 8 or 9 carbons to the whole alkyl groups of $R_1$ through $R_3$ ranges from 0 to 85 mol%,
a ratio of an alkyl group having 10 carbons to the whole alkyl groups of $R_1$ through $R_3$ ranges from 15 to 100 mol%, and
a ratio of an alkyl group having 11 or more carbons to the whole alkyl groups of $R_1$ through $R_3$ ranges from 0 to 10 mol%, and wherein
the linear chain ratio of $R_1$ through $R_3$ is a ratio of a linear chain alkyl group to the whole alkyl groups of $R_1$ through $R_3$;

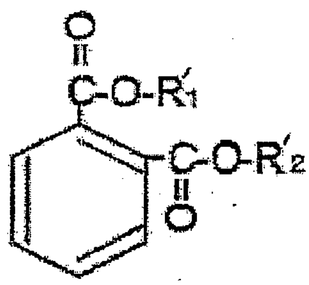
(2)

wherein

$R'_1$ and $R'_2$ represent an alkyl group and may be identical with each other or different from each other,
a linear chain ratio of $R'_1$ and $R'_2$ is 60 mol% or more,

a ratio of an alkyl group having 8 carbons or less to the whole alkyl groups of $R'_1$ and $R'_2$ ranges from 0 to 10 mol%,
a ratio of an alkyl group having 9 carbons to the whole alkyl groups of $R'_1$ and $R'_2$ ranges from 10 to 30 mol%,
a ratio of an alkyl group having 10 carbons to the whole alkyl groups of $R'_1$ and $R'_2$ ranges from 30 to 50 mol%,
a ratio of an alkyl group having 11 carbons to the whole alkyl groups of $R'_1$ and $R'_2$ ranges from 30 to 50 mol%, and
a ratio of an alkyl group having 12 carbons or more to the whole alkyl groups of $R'_1$ and $R'_2$ ranges from 0 to 10 mol%, and wherein
the linear chain ratio of $R'_1$ and $R'_2$ is a ratio of a linear chain alkyl group to the whole alkyl groups of $R'_1$ and $R'_2$.

**2.** The vinyl chloride resin composition for powder molding as set forth in claim 1, wherein said composition further contains a plasticizer(s) other than the (b) trimellitate plasticizer and the (c) diester phthalate plasticizer.

**3.** A vinyl chloride resin molded article obtained by subjecting to powder slush molding a vinyl chloride resin composition for powder molding as set forth in claim 1 or 2.

**4.** The vinyl chloride resin molded article as set forth in claim 3, wherein said vinyl chloride resin molded article is an automobile instrument panel surface.

**5.** The vinyl chloride resin molded article as set forth in claim 3, wherein said vinyl chloride resin molded article is a door trim surface.

**6.** A laminate, obtained by stacking a polyurethane foam molded article and a vinyl chloride resin molded article as set forth in claim 3.

**7.** Use of a laminate as set forth in claim 6 for automobile interior materials.

**8.** Use of a laminate as set forth in claim 7, wherein the automobile interior material is an automobile instrument panel or a door trim.

**9.** Use of a vinyl chloride resin composition as set forth in claim 1 or 2 for powder molding.

**10.** Use as set forth in claim 9, wherein the powder molding is powder slush molding.

## Patentansprüche

**1.** Eine Vinylchloridharzzusammensetzung zur Pulverformung, umfassend:

100 Massenteile eines (a) Vinylchloridharzes;
65 bis 105 Massenteile eines (b) Trimellitat-Weichmachers, dargestellt durch Formel (1); und
10 bis 50 Massenteile eines (c) Diesterphthalat-Weichmachers, dargestellt durch Formel (2),
ein Mischungsverhältnis des (c) Diesterphthalat-Weichmachers, dargestellt durch Formel (2), zur Gesamtheit der Weichmacher, das in einem Bereich von 5 bis 50 Massenprozente liegt,

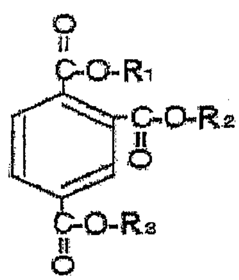
(1)

wobei

$R_1$ bis $R_3$ eine Alkylgruppe darstellen und identisch oder voneinander verschieden sein können, ein Geradkettenverhältnis von $R_1$ bis $R_3$ 90 Mol-% oder mehr beträgt, ein Verhältnis einer Alkylgruppe mit 7 Kohlenstoffatomen oder weniger zur Gesamtheit der Alkylgruppen von $R_1$ bis $R_3$ im Bereich von 0 bis 10 Mol-% liegt, ein Verhältnis einer Alkylgruppe mit 8 oder 9 Kohlenstoffatomen zur Gesamtheit der Alkylgruppen von $R_1$ bis $R_3$ im Bereich von 0 bis 85 Mol-% liegt, ein Verhältnis einer Alkylgruppe mit 10 Kohlenstoffatomen zur Gesamtheit der Alkylgruppen von $R_1$ bis $R_3$ im Bereich von 15 bis 100 Mol-% liegt, und ein Verhältnis einer Alkylgruppe mit 11 oder mehr Kohlenstoffatomen zur Gesamtheit der Alkylgruppen von $R_1$ bis $R_3$ im Bereich von 0 bis 10 Mol-% liegt, und wobei das Geradkettenverhältnis von $R_1$ bis $R_3$ ein Verhältnis einer geradkettigen Alkylgruppe zur Gesamtheit der Alkylgruppen von $R_1$ bis $R_3$ ist;

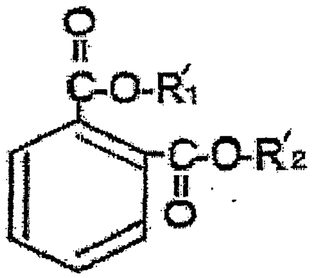

(2)

wobei

$R'_1$ und $R'_2$ eine Alkylgruppe darstellen und identisch oder voneinander verschieden sein können, ein Geradkettenverhältnis von $R'_1$ und $R'_2$ 60 Mol-% oder mehr beträgt, ein Verhältnis einer Alkylgruppe mit 8 Kohlenstoffatomen oder weniger zur Gesamtheit der Alkylgruppen von $R'_1$ und $R'_2$ im Bereich von 0 bis 10 Mol-% liegt, ein Verhältnis einer Alkylgruppe mit 9 Kohlenstoffatomen zur Gesamtheit der Alkylgruppen von $R'_1$ und $R'_2$ im Bereich von 10 bis 30 Mol-% liegt, ein Verhältnis einer Alkylgruppe mit 10 Kohlenstoffatomen zur Gesamtheit der Alkylgruppen von $R'_1$ und $R'_2$ im Bereich von 30 bis 50 Mol-% liegt, ein Verhältnis einer Alkylgruppe mit 11 Kohlenstoffatomen zur Gesamtheit der Alkylgruppen von $R'_1$ und $R'_2$ im Bereich von 30 bis 50 Mol-% liegt, und ein Verhältnis einer Alkylgruppe mit 12 Kohlenstoffatomen oder mehr zur Gesamtheit der Alkylgruppen von $R'_1$ und $R'_2$ im Bereich von 0 bis 10 Mol-% liegt, und wobei das Geradkettenverhältnis von $R'_1$ und $R'_2$ ein Verhältnis einer geradkettigen Alkylgruppe zur Gesamtheit der Alkylgruppen von $R'_1$ und $R'_2$ ist.

**2.** Die Vinylchloridharzzusammensetzung zur Pulverformung gemäß Anspruch 1, wobei die Zusammensetzung ferner (einen) Weichmacher enthält, außer des (b) Trimellitat-Weichmachers und des (c) Diesterphthalat-Weichmachers.

**3.** Ein Formgegenstand aus Vinylchloridharz, der erhalten wird, indem eine Vinylchloridharzzusammensetzung für Pulverformen gemäß Anspruch 1 oder 2 Pulverschalenguss unterzogen wird.

**4.** Der Formgegenstand aus Vinylchloridharz gemäß Anspruch 3, wobei der Formgegenstand aus Vinylchloridharz eine Oberfläche einer Automobil-Instrumententafel ist.

**5.** Der Formgegenstand aus Vinylchloridharz gemäß Anspruch 3, wobei der Formgegenstand aus Vinylchloridharz eine Oberfläche einer Türverkleidung ist.

**6.** Ein Laminat, das durch Stapeln eines Formgegenstands aus Polyurethanschaum und eines Formgegenstands aus Vinylchloridharz gemäß Anspruch 3 erhalten wird.

**7.** Verwendung eines Laminats gemäß Anspruch 6 für Automobil-Innenmaterialien.

**8.** Verwendung eines Laminats gemäß Anspruch 7, wobei das Automobil-Innenmaterial eine Automobil-Instrumententafel oder eine Türverkleidung ist.

**9.** Verwendung einer Vinylchloridharzzusammensetzung gemäß Anspruch 1 oder 2 zur Pulverformung.

**10.** Verwendung gemäß Anspruch 9, wobei die Pulverformung Pulverschalenguss ist.

## Revendications

**1.** Composition de résine de chlorure de vinyle pour moulage de poudre, comprenant :

100 parties en masse de (a) une résine de chlorure de vinyle ; de 65 à 105 parties en masse de (b) un plastifiant de trimellitate représenté par la formule (1) ; et
de 10 à 50 parties en masse de (c) un plastifiant de phtalate de diester représenté par la formule (2),
un rapport de mélange de (c) le plastifiant de phtalate de diester représenté par la formule (2), à tous les plastifiants se trouvant dans un intervalle de 5 à 50 pourcents en masse,

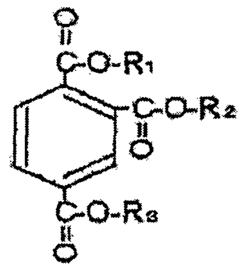
(1)

où

$R_1$ à $R_3$ représentent un groupe alkyle et peuvent être identiques les uns aux autres ou différents les uns des autres,
un rapport de chaine linéaire de $R_1$ à $R_3$ est de 90 % en mole ou supérieur,
un rapport d'un groupe alkyle ayant 7 atomes de carbone ou moins par rapport à tous les groupes alkyle de $R_1$ à $R_3$ est de 0 à 10 % en mole,
un rapport d'un groupe alkyle ayant 8 ou 9 atomes de carbone par rapport à tous les groupes alkyle de $R_1$ à $R_3$ est de 0 à 85 % en mole,
un rapport d'un groupe alkyle ayant 10 atomes de carbone par rapport à tous les groupes alkyle de $R_1$ à $R_3$ est de 15 à 100 % en mole, et
un rapport d'un groupe alkyle ayant 11 atomes de carbone ou plus par rapport à tous les groupes alkyle de $R_1$ à $R_3$ est de 0 à 10 % en mole, et où
le rapport de chaine linéaire de $R_1$ à $R_3$ est un rapport d'un groupe alkyle à chaine linéaire par rapport à tous les groupes alkyle de $R_1$ à $R_3$ ;

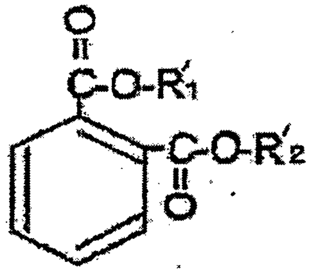
(2)

où

$R'_1$ et $R'_2$ représentent un groupe alkyle et peuvent être identiques l'un à l'autre ou différents l'un de l'autre,

un rapport de chaine linéaire de R'$_1$ et R'$_2$ est de 60 % en mole ou supérieur,
un rapport d'un groupe alkyle ayant 8 atomes de carbone ou moins par rapport à tous les groupes alkyle de R'$_1$ et R'$_2$ est de 0 à 10 % en mole,
un rapport d'un groupe alkyle ayant 9 atomes de carbone par rapport à tous les groupes alkyle de R'$_1$ et R'$_2$ est de 10 à 30 % en mole,
un rapport d'un groupe alkyle ayant 10 atomes de carbone par rapport à tous les groupes alkyle de R'$_1$ et R'$_2$ est de 30 à 50 % en mole,
un rapport d'un groupe alkyle ayant 11 atomes de carbone par rapport à tous les groupes alkyle de R'$_1$ et R'$_2$ est de 30 à 50 % en mole, et
un rapport d'un groupe alkyle ayant 12 atomes de carbone ou plus par rapport à tous les groupes alkyle de R'$_1$ et R'$_2$ est de 0 à 10 % en mole, et où
le rapport de chaine linéaire de R'$_1$ et R'$_2$ est un rapport d'un groupe alkyle à chaine linéaire par rapport à tous les groupes alkyle de R'$_1$ et R'$_2$.

**2.** Composition de résine de chlorure de vinyle pour moulage de poudre selon la revendication 1, dans laquelle ladite composition contient de plus un(des) plastifiant(s) différent(s) du (b) plastifiant de trimellitate et du (c) plastifiant de phtalate de diester.

**3.** Article moulé de résine de chlorure de vinyle obtenu en soumettant à un moulage de poudre par embouage une composition de résine de chlorure de vinyle pour moulage de poudre selon la revendication 1 ou 2.

**4.** Article moulé de résine de chlorure de vinyle selon la revendication 3, dans lequel ledit article moulé de résine de chlorure de vinyle est une surface de panneau d'instrument de véhicule automobile.

**5.** Article moulé de résine de chlorure de vinyle selon la revendication 3, dans lequel ledit article moulé de résine de chlorure de vinyle est une surface de garniture de portière.

**6.** Stratifié, obtenu en empilant un article moulé de mousse de polyuréthane et un article moulé de résine de chlorure de vinyle selon la revendication 3.

**7.** Utilisation d'un stratifié selon la revendication 6 pour des matières intérieures de véhicule automobile.

**8.** Utilisation d'un stratifié selon la revendication 7, dans laquelle la matière intérieure de véhicule automobile est un panneau d'instrument de véhicule automobile ou une garniture de portière.

**9.** Utilisation d'une composition de résine de chlorure de vinyle selon la revendication 1 ou 2 pour un moulage de poudre.

**10.** Utilisation selon la revendication 9, dans laquelle le moulage de poudre est un moulage de poudre par embouage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007216506 A
- JP H890697 A
- JP 4026303 B
- EP 0354700 A1
- WO 02094610 A2
- JP NO61174270 B

### Non-patent literature cited in the description

- Polyvinyl chloride. Nikkan Kogyo Shinbun Ltd, 1988, 75-104